Europäisches Patentamt

European Patent Office

Office européen des brevets

(11) Veröffentlichungsnummer: **0 426 927 A1**

# (12) EUROPÄISCHE PATENTANMELDUNG

(21) Anmeldenummer: 89710076.4

(22) Anmeldetag: 06.11.89

(51) Int. Cl.5: **H01B 13/14**

(43) Veröffentlichungstag der Anmeldung:
15.05.91 Patentblatt 91/20

(84) Benannte Vertragsstaaten:
AT BE CH DE ES FR GB IT LI NL SE

(71) Anmelder: **PAUL TROESTER MASCHINENFABRIK**
**Am Brabrinke 1-4**
**W-3000 Hannover 81(DE)**

(72) Erfinder: **Brüll, Albert**
**Am Wehrbusch 10**
**W-3014 Laatzen(DE)**
Erfinder: **Greve, Helmut, Dipl.-Ing.**
**Gerdingstrasse 13 A**
**W-3000 Hannover 72(DE)**

(74) Vertreter: **Junius, Walther, Dr.**
**Wolfstrasse 24**
**W-3000 Hannover-Waldheim(DE)**

(54) Verfahren und Vorrichtung zur Stabilisierung extrudierter strangförmiger Produkte, insbesondere Kabel, für die Silanvernetzung.

(57) Die Erfindung betrifft ein Verfahren und eine Vorrichtung zur Stabilisierung extrudierter strangförmiger Produkte, insbesondere Kabel, für die Silan-Vernetzung, bestehend aus einem von einem Extruder gespeisten Strangspritzkopf und einer aus einem langen, einteiligen oder aus mehreren Rohrstücken zusammengesetzten Durchhangrohr bestehenden Vernetzungsanlage. Es ist die Aufgabe der vorliegenden Erfindung, eine einfache Möglichkeit zu schaffen, um die für die Silan-Vernetzung vorgesehenen Produkte in einem Durchhangrohr zu kühlen und in ihrer Form zu stabilisieren und so die Anlage bei geringem Umrüstungsaufwand für beide Verfahren optimal einsetzen zu können. Die erfindungsgemäße Vorrichtung ist gekennzeichnet durch mindestens eine Vorrichtung zum Behandeln des Stranges mit Wasser vor oder im gasgefüllten Durchhangrohr.

EP 0 426 927 A1

# VERFAHREN UND VORRICHTUNG ZUR STABILISIERUNG EXTRUDIERTER STRANGFÖRMIGER PRODUKTE, INSBESONDERE KABEL, FÜR DIE SILAN-VERNETZUNG

Die Erfindung betrifft ein Verfahren und eine Vorrichtung zur Stabilisierung extrudierter strangförmiger Produkte, insbesondere Kabel, für die Silan-Vernetzung, bestehend aus einem von einem Extruder gespeisten Strangspritzkopf und einer aus einem langen, einteiligen oder aus mehreren Rohrstücken zusammengesetzten Durchhangrohr bestehenden Vernetzungsanlage.

Die kontinuierliche Vernetzung oder Vulkanisation von Kabelisolierungen wird in unterschiedlichen Anlagen mit unterschiedlichen Verfahren durchgeführt, die Vernetzungsanlagen bestehen aber in den meisten Fällen aus einem langen Rohr, welches bei der Herstellung dickerer Kabel in seiner Form dem Kabeldurchhang angepaßt ist und unter anderen nach Art einer Kettenlinie gestaltet ist. Die Zugkraft des in dieser Vernetzungsanlage befindlichen Kabels ist sorgfältig zu regeln, damit es berührungsfrei im Rohrzentrum hängt und ein Scheuern an den Rohrwandungen ober- oder unterseitig vermieden wird.

Für die Isolierung von Hochspannungskabeln wird zunehmend Polyäthylen als Ummantelungsmaterial eingesetzt, das häufig mittels Peroxiden vernetzt wird, die bei entsprechender Erwärmung den Vernetzungsvorgang auslösen und bewirken. Die Verwendung von Dampf als Wärmeträger ist nur bei Nieder- und Mittelspannungskabeln möglich, verbietet sich aber bei Hochspannungskabeln wegen der Bildung kleiner Hohlräume, die durch Feuchtigkeitseinwirkung die elektrische Isolierung stark beeinträchtigen. Aus diesem Grunde arbeitet man in den Vernetzungsanlagen meist mit einem heißen Inertgas, vorzugsweise Stickstoff. Die anschließende Kühlstrecke kann mit einer Gas-oder auch mit einer Wasserkühlung arbeiten. Nachteil dieser Vernetzungsanlagen ist es, daß wegen des Einhaltens relativ niedriger Extrusions-Temperaturen mit niedrigen Schneckendrehzahlen im Extruder, also mit niedriger Ausstoßleistung, gearbeitet werden muß und daß das in dicker Schicht heiß aufgebrachte Polyäthylen sich unter dem Einfluß der Schwerkraft noch vor oder während der Vernetzung unerwünscht verformt.

Es hat nun ein anderes Vernetzungsverfahren bei der Verarbeitung von Polyäthylen Verbreitung gefunden, welches unter dem Namen Silan-Vernetzung bekanntgeworden ist. Bei diesem Arbeitsverfahren kann eine fertige Polyäthylen-Silan-Katalisator-Mischung mit einem Extruder mit hoher, d. h. normaler Polyäthylen-Schmelztemperatur und hoher Schneckendrehzahl und entsprechend großer Ausstoßleistung verarbeitet werden, weil eine Vernetzung bereits im Extruder nicht zu befürchten ist. Denn die Vernetzung dieses Materials wird nicht durch Wärme allein initiiert und durchgeführt. Das mit der extrudierten Isolierumhüllung versehene Kabel wird nach dem Extrusionsvorgang direkt in ein Kühlbad geleitet und abgekühlt und dabei in seiner Form stabilisiert. Der Vernetzungsvorgang erfolgt dann anschließend in einem anderen Arbeitsgang.

Für die Durchführung dieses Silan-Verfahrens sind spezielle Anlagen entwickelt worden. Kabelfabriken, die diese Anlagen nicht anschaffen wollten, weil sie nur gelegentlich nach dem Silan-Verfahren arbeiten, haben diejenigen Vernetzungsanlagen für die Durchführung dieses Verfahrens benutzt, die für die Verarbeitung von mit Peroxiden gemischtem Polyäthylen entwickelt waren, indem sie einfach das lange Vernetzungsrohr teilweise oder ganz mit Wasser füllten. Dabei zeigte sich, daß das Kabel mit geringem mittleren Querschnittsgewicht im Wasser durch den Auftrieb so stark beeinflußt wird, daß die Zugkraft im Kabel instabil wird und nicht feinfühlig genug geregelt werden kann. Beim Durchziehen des Kabels durch das in Kettenlinie gebogene Rohr kam es dabei durch die wechselnde Zugkraft zum Schleifen des Kabels an der oberen und/oder unteren Rohrwandung. Durch nur teilweise Füllung des Rohres mit Wasser kann man diesen Effekt des Aufschwimmens abmildern. Dabei ergibt sich aber der Nachteil, daß sich der Effekt der Deformation des frisch aufgebrachten, noch verformbaren Isolationsmantels unter dem Einfluß der Schwerkraft in nicht unerheblicher Weise bemerkbar macht, und damit die Fertigungstoleranzen des Isolationsmantels schlechter werden.

Die Erfindung vermeidet die Nachteile des Standes der Technik. Es ist die Aufgabe der vorliegenden Erfindung, eine einfache Möglichkeit zu schaffen, um die für die Silan-Vernetzung vorgesehenen Produkte in einem Durchhangrohr zu kühlen und in ihrer Form zu stabilisieren und so die Anlage bei geringem Umrüstungsaufwand für beide Verfahren optimal einsetzen zu können.

Diese Aufgabe wird erfindungsgemäß dadurch gelöst, daß man das Produkt nach der Extrusion einer schockartigen Abkühlung durch Wasser unterwirft und es dann in das geöffnete Durchhangrohr einlaufen läßt, das in seinem Inneren Gas bzw. Luft enthält, so daß der Produktstrang im wesentlichen in Gas bzw. in Luft frei hängt. Diese schockartige Behandlung kann vor dem Einlauf in das Durchhangrohr erfolgen, sie kann aber auch allein im Durchhangrohr erfolgen, sie kann auch vor dem Durchhangrohr und dann weiter im Durchhangrohr erfolgen, in welchem man den Produktstrang weiterer Wasserbehandlung aussetzt. Die Behandlung im Durchhangrohr kann auch durch gekühlte Luft bzw. gekühlte Gase unterstützt werden.

Die erfindungsgemäße Vorrichtung ist gekennzeichnet durch mindestens eine Vorrichtung zum Behandeln des Stranges mit Wasser vor oder im gasgefüllten Durchhangrohr.

Dabei ist es zweckmäßig, wenn die Vorrichtung zum Behandeln mit Wasser zwischen dem Strangspritzkopf und dem Rohranfang der Vernetzungsanlage angeordnet ist und/oder wenn eine oder mehrere Vorrichtungen zum Behandeln mit Wasser im Durchhangrohr und dort vorzugsweise zwischen einzelnen Rohrstücken der Vernetzungsanlage angeordnet sind.

Durch die Wasserbehandlung unmittelbar nach der Extrusion vor dem Einlaufen in das Durchhangrohr, wird eine so erhebliche Stabilisierung der extrudierten Isolierumhüllung des Kabels erreicht, daß eine Verformung unter dem Einfluß der Schwerkraft wanddickenbedingt nicht mehr bzw. in erheblich verringertem Maße stattfindet. Da im Durchhangrohr Wasser nur durch Schwallwasserdüsen und/oder Sprühvorrichtungen eingeführt wird, sammelt es sich lediglich im tiefstliegenden Teil des Durchhangrohres, während die übrigen Teile des Durchhangrohres ungefüllt sind. Daher wirkt auf das zu behandelnde Strangprodukt kein Auftrieb und die Regelvorrichtung kann das zu behandelnde Strangprodukt durch das Durchhangrohr in genau der gleichen Weise wie bei einer Heißgasbehandlung von Peroxydpoly-Äthylengemischen durch das Rohr führen, wobei die Zugkraft im Kabel stabil bleibt und die Regelung mit der notwendigen Feinfühligkeit durchgeführt werden kann.

Damit die Anlage sowohl für das Silan-Verfahren als auch für die Heißgasbehandlung genutzt werden kann, ist es zweckmäßig, wenn die Wasserbehandlungsvorrichtung transportabel, vorzugsweise auf einem quer zur Rohrachse der Vernetzungsanlage verfahrbaren Wagen angeordnet ist. Dieser Wagen kann dann je nach Bedarf zwischen den Strangpreßkopf und den Rohranfang der Vernetzungsanlage ein- und wieder herausgefahren werden.

Eine zweckmäßige Ausführungsform der Erfindung besteht darin, daß die Vernetzungsanlage an ihrem dem Spritzkopf zugewandten Ende mit einem teleskopierbaren Rohrstück versehen ist und daß bei zurückgeschobenem Teleskoprohr der Wagen mit der Wasserbehandlungsvorrichtung in den Zwischenraum zwischen Spritzkopf und Teleskoprohr einfahrbar ist.

Eine andere zweckmäßige Ausführungsform besteht darin, daß der Spritzkopf mit der Extrusionsanlage von der Vernetzungsanlage weg verschiebbar ist, und daß der Wagen mit der Wasserbehandlungsanlage in den Zwischenraum zwischen Spritzkopf und Teleskoprohr einfahrbar ist. Auch in diesem Fall kann durch einfaches Verfahren des Wagens mit der Wasserbehandlungsanlage und Verfahrens des Spritzkopfes in der Extrusionsanlage von einem Bearbeitungsverfahren zum anderen Bearbeitungsverfahren übergegangen werden.

In jedem Falle ist es zweckmäßig, wenn die Wasserbehandlungsvorrichtung fest und wasserdicht an das Anfangsrohr der Vernetzungsanlage im Betriebszustand ankoppelbar ist. Denn das aus der dem Vernetzungsrohr vorgeschalteten Wasserbehandlungsvorrichtung austretende strangförmige Produkt wird zweckmäßigerweise aus der Wasserbehandlungsvorrichtung so entlassen, daß an ihm noch Wasser entlangfließt, bzw. an ihm noch Wasser anhaftet.

Zweckmäßig ist es, wenn die Wasserbehandlungsvorrichtung aus einem Wasserbecken mit einem Strangeinlaß-und einer Strangauslaßvorrichtung besteht.

Eine andere Ausführungsform ist zweckmäßigerweise so ausgebildet, daß die Wasserbehandlungsvorrichtung Schwalldüsen und/oder Sprühvorrichtungen aufweist.

Zweckmäßig ist es, wenn in der Wasserbehandlungsvorrichtung mindestens ein Auffangbekken und mindestens eine an das Auffangbecken angeschlossene Pumpe angeordnet ist, die das im Auffangbecken gesammelte Wasser wieder der Wasserbehandlung des Strangproduktes zuführt.

Zweckmäßig ist es auch, wenn die Wasserbehandlungsvorrichtung mit einem Anschlußstutzen für eine von der Vernetzungsanlage herangeführte Wasserleitung versehen ist. Denn das am Strangprodukt entlangfließende Wasser wird in der Vernetzungsanlage gesammelt und es ist zweckmäßig, dieses hier gesammelte Wasser wieder der Wasserbehandlungsvorrichtung zuzuführen.

Es hat sich als zweckmäßig erwiesen, die Düsen der im Rohr der Vernetzungsanlage angeordneten Wasserbehandlungsvorrichtungen gegen Blindstopfen auszutauschen, damit bei der Anwendung eines anderen Verfahrens, bei dem Heißgas im Durchhangrohr befindlich ist, die Düsen nicht verstopft, beschädigt oder zerstört werden.

Das Wesen der Erfindung ist nachstehend anhand von in der Zeichnung dargestellten Ausführungsbeispielen näher erläutert. Es zeigen:

Fig. 1 eine Ansicht der Vorrichtung von der Seite, teilweise im Schnitt,

Fig. 2 eine Ansicht der Vorrichtung der Fig. 1 von oben,

Fig. 3 eine Ansicht einer anderen Wasserbehandlungsvorrichtung,

Fig. 4 eine Ansicht einer weiteren Wasserbehandlungsvorrichtung,

Fig. 5 einen Schnitt durch die Düsenanordnung dieser Wasserbehandlungsvorrichtung,

Fig. 6 eine Anordnung einer Wasserbehandlungsvorrichtung im Durchhangrohr,

Fig. 7 einen Querschnitt durch diese Vorrichtung.

Ein in den Spritzkopf 1 eines nicht dargestellten Extruders einlaufender Leiter oder Kabel 2 wird in diesem Spritzkopf 1 mit einer das Kabel umhüllenden Isolierung bzw. Ummantelung 3 versehen. Dieses mit der Umhüllung 3 versehene Kabel 2 wird zur Vernetzung der Umhüllung 3 in das Durchhangrohr 4 eingeleitet, welches als erstes Rohrstück ein Teleskoprohr 5 aufweist, dessen Teleskoprohrkopf 6 an den Ausgangsstutzen 7 ankoppelbar ist, damit bei der Verarbeitung von Polyäthylen-Peroxyd-Gemischen ein gasdichter Übergang vom Spritzkopf 1 auf das Durchhangrohr 4 gewährleistet ist. Dieses Teleskoprohr 5 ist in das Durchhangrohr 4 einschiebbar.

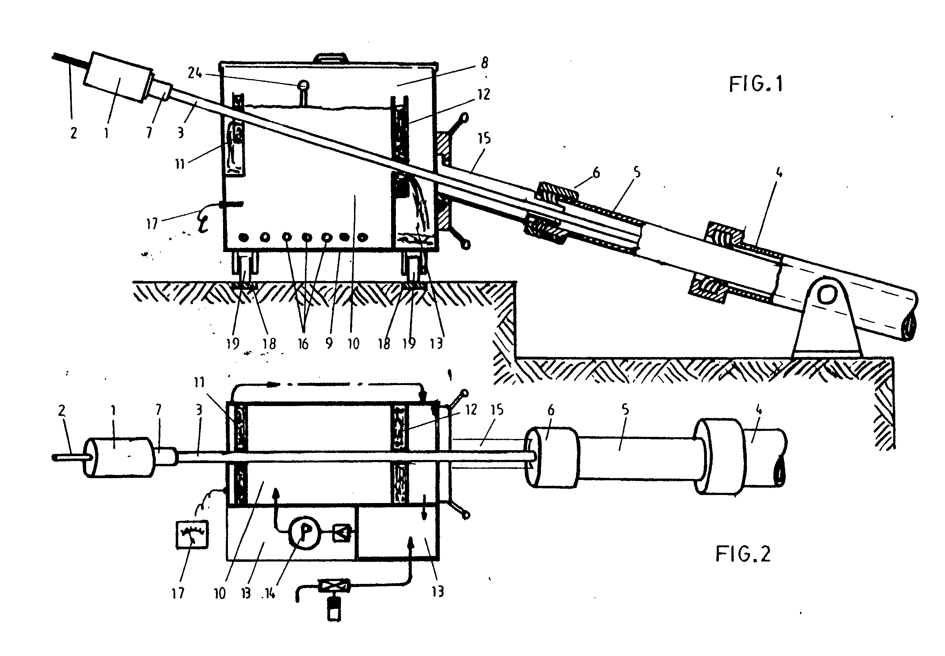

Ist diese Einschiebung des Teleskoprohres 5 in das Durchhangrohr 4 vorgenommen, ist zwischen dem Spritzkopf 1 und dem Durchhangrohr 4 ausreichend Platz, um eine Wasserbehandlungsvorrichtung 8 zwischen dem Spritzkopf 1 und dem Durchhangrohr 4 anzuordnen. Diese Wasserbehandlungsvorrichtung besteht im Ausführungsbeispiel der Fig. 1 und 2 aus einem auf dem Wagen 9 montierten Tauchbad 10, welches mit einer Stangeinlaßvorrichtung 11 und einer Strangauslaßvorrichtung 12 versehen ist. Durch diese Strangeinlaßvorrichtung 11 und die Strangauslaßvorrichtung 12 entweicht Wasser aus dem Tauchbad 10, das in der Auffangwanne 13 aufgefangen wird und mittels der Pumpe 14 in das Tauchbad 10 zurückgepumpt wird. Das strangförmige Produkt 3 verläßt die Wasserbehandlungsvorrichtung 8 durch einen Auslaßstutzen 15 der an den Teleskoprohrkopf 6 wasserdicht angekoppelt ist. Das Tauchbad 10 wird durch Tauchheizkörper 16 geregelt durch die Regelvorrichtung 17 aufgeheizt. Mittels der Räder 19 ist der Wagen 9 auf Schienen 18 fahrbar.

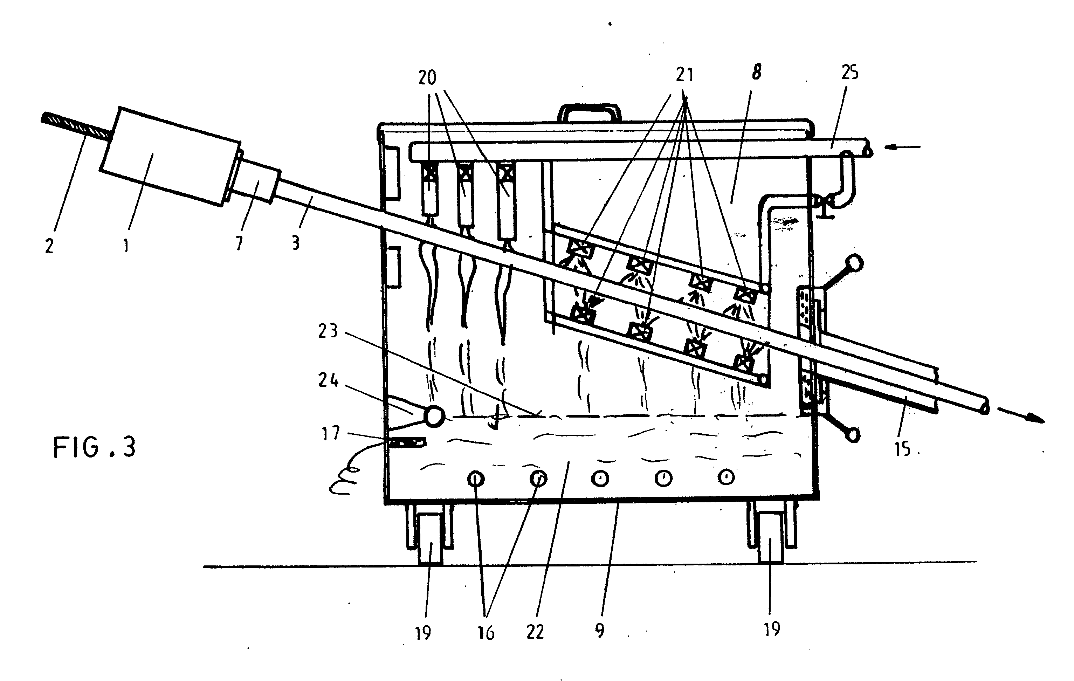

Im Ausführungsbeispiel der Fig. 3 ist die Wärmebehandlungsvorrichtung 8 mit Schwallwasserdüsen 20 und Sprühdüsen 21 ausgestattet. Der untere Teil des Wagens 9 ist als Auffangbecken 22 gestaltet. Über das Niveau 23 herübersteigendes Wasser wird durch den Niveauwächter 24 festgestellt und in ein nicht dargestelltes Auslaßrohr abgeführt, welches das Wasser einer nicht dargestellten externen Pumpe zuführt und über die Wasserleitung 25 wieder den Schwallwasserdüsen 20 und Sprühdüsen 21 zuführt.

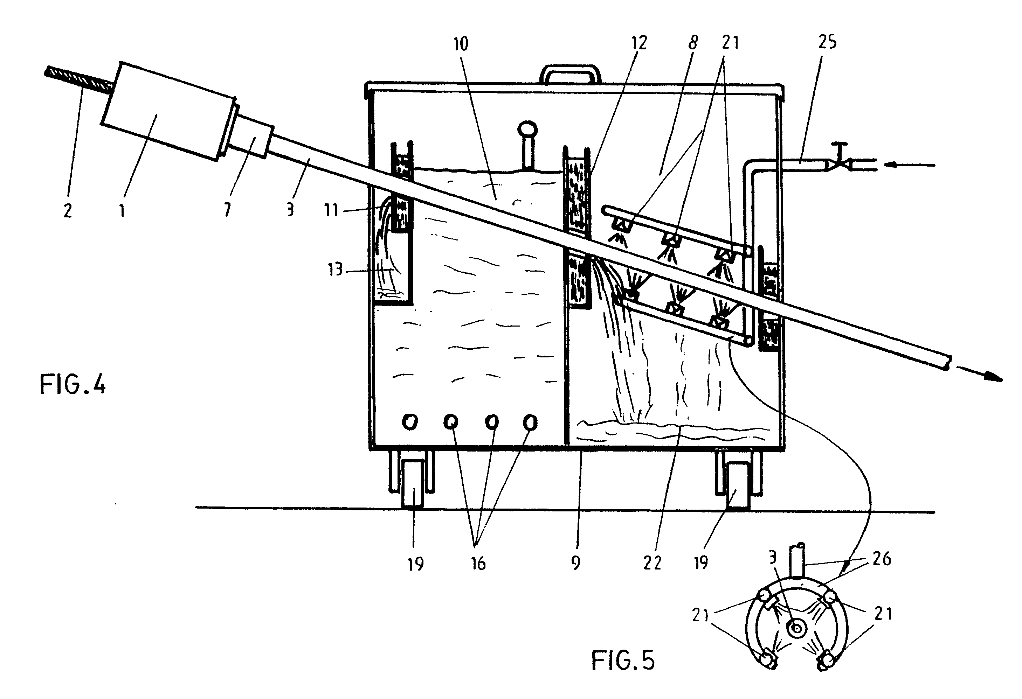

Im Ausführungsbeispiel der Fig. 4 ist in dem Wagen 9 der Wasserbehandlungsvorrichtung 8 sowohl ein Tauchbad 10 als auch eine mit Sprühdüsen 21 ausgerüstete Besprühvorrichtung angeordnet. Die Sprühdüsen 21 sind um 90° versetzt angeordnet und von der Wasserleitung 26 getragen (Fig. 5).

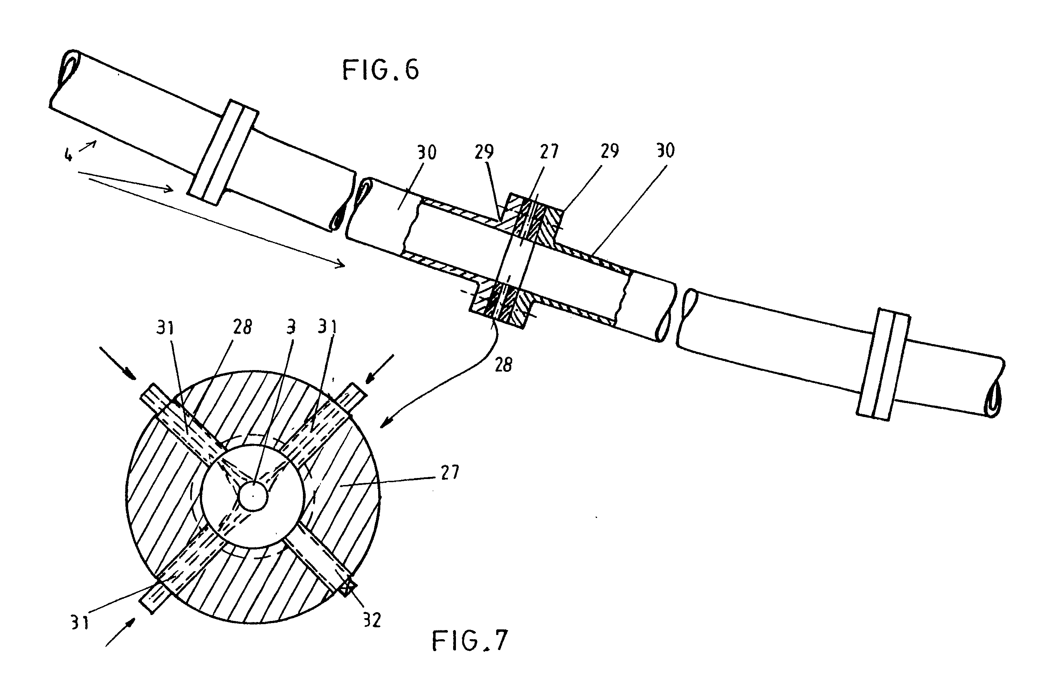

Wie Fig. 6 zeigt, sind im Durchhangrohr 4 Wasserbehandlungsvorrichtungen 27 zwischen je zwei Flanschen 29 von Rohrstücken 30 angeordnet. Diese Wasserbehandlungsvorrichtungen 27 weisen Düsen 31 auf, die ausgeschraubt werden können und durch Blindstücke 32 ersetzt werden können.

## Ansprüche

1. Vorrichtung zur Stabilisierung extrudierter strangförmiger Produkte, insbesondere Kabel, für die Silan-Vernetzung, bestehend aus einem von einem Extruder gespeisten Strangspritzkopf (1) und einer aus einem langen, einteiligen oder aus mehreren Rohrstücken (30) zusammengesetzten Durchhangrohr (4) bestehenden Vernetzungsanlage, gekennzeichnet durch mindestens eine Vorrichtung (8, 27) zum Behandeln des Stranges (3) mit Wasser vor oder im gasgefüllten Durchhangrohr (4).

2. Vorrichtung nach Anspruch 1, dadurch gekennzeichnet, daß die Vorrichtung (8,20,21) zum Behandeln mit Wasser zwischen dem Strangspritzkopf (1) und dem Rohranfang der Vernetzungsanlage (4) angeordnet ist, und/oder daß eine oder mehrere Vorrichtungen (31) zum Behandeln mit Wasser im Durchhangrohr und dort vorzugsweise zwischen einzelnen Rohrstücken (30) der Vernetzungsanlage (4) angeordnet sind.

3. Vorrichtung nach Anspruch 1, dadurch gekennzeichnet, daß die Wasserbehandlungsvorrichtung (8) auf einem quer zur Rohrachse der Vernetzungsanlage (4) verfahrbaren Wagen (9) angeordnet ist.

4. Vorrichtung nach Anspruch 1 bis 3, dadurch gekennzeichnet, daß die Vernetzungsanlage (4) an ihrem dem Spritzkopf (1) zugewandten Ende mit einem teleskopierbaren Rohrstück (5) versehen ist, und daß bei eingeschobenen Teleskoprohr (5) der Wagen (9) mit der Wasserbehandlungsvorrichtung (8) in den Zwischenraum zwischen Spritzkopf (1) und Teleskoprohr (5) einfahrbar ist.

5. Vorrichtung nach Anspruch 1 bis 3, dadurch gekennzeichnet, daß der Spritzkopf (1) mit der Extrusionsanlage von der Vernetzungsanlage (4) weg verschiebbar ist, und daß der Wagen (9) mit der Wasserbehandlungsanlage (8) in den Zwischenraum zwischen Spritzkopf (1) und Vernetzungsanlage (4) einfahrbar ist.

6. Vorrichtung nach einem der Ansprüche 1 bis 5, dadurch gekennzeichnet, daß die Wasserbehandlungsvorrichtung (8) fest und wasserdicht an das Anfangsrohr (5) der Vernetzungsanlage (4) im Betriebszustand ankoppelbar ist.

7. Vorrichtung nach Anspruch 1,
dadurch gekennzeichnet,
daß die Wasserbehandlungsvorrichtung (8) aus einem Wasserbecken (10) mit einer Strangeinlaßvorrichtung (11) und einer Strangauslaßvorrichtung (12) besteht.

8. Vorrichtung nach Anspruch 1,
dadurch gekennzeichnet,
daß die Wasserbehandlungsvorrichtung (8) Schwallwasserdüsen (20) und/oder Sprühvorrichtungen (21) aufweisen.

9. Vorrichtung nach Anspruch 1,
dadurch gekennzeichnet,
daß in der Wasserbehandlungsvorrichtung (8) mindestens ein Auffangbecken (13) und mindestens eine an das Auffangbecken (13) angeschlossene Pumpe (14) mit einem Temperier- und Wasserniveau-Regelkreis angeordnet sind.

10. Vorrichtung nach Anspruch 1,
dadurch gekennzeichnet,
daß die Wasserbehandlungsvorrichtung (8) mit einem Anschlußstutzen für eine von der Umwälzpumpe (14) herangeführte Wasserleitung versehen ist.

11. Vorrichtung nach Anspruch 1,
dadurch gekennzeichnet,
daß die Düsen (31), die im Durchhangrohr und dort vorzugsweise in den zwischen den einzelnen Rohrstücken (30) angeordneten Wasserbehandlungsvorrichtungen (8) angeordnet sind, gegen Blindstopfen (32) austauschbar bzw. durch spezielle Verschlüsse gegen Dampf- oder Heißgasdruck abdichtbar und gegen Ablagerungen aus dem Vernetzungsprozeß schützbar sind.

12. Verfahren zur Stabilisierung strangförmiger extrudierter Produkte, insbesondere Kabel, in einem Durchhangrohr, für die Silan-Vernetzung,
dadurch gekennzeichnet,
daß man das Produkt nach der Extrusion einer schockartigen Abkühlung durch Wasser unterwirft und es dann in das ungefüllte Durchhangrohr einlaufen läßt, in welchem man es einer weiteren Wasserbehandlung aussetzt.

13. Verfahren nach Anspruch 12,
dadurch gekennzeichnet,
daß man die Abkühlung durch gekühlte Gase im Durchhangrohr unterstützt.

14. Verwendung einer Vorrichtung zur Herstellung vernetzter strangförmiger Produkte, insbesondere Kabel, bestehend aus einem von einem Extruder gespeisten Strangspritzkopf (1) und einer aus einem langen einteiligen oder aus mehreren Rohrstücken (30) zusammengesetzten Durchhangrohr (4) bestehenden Vernetzungsanlage zur Stabilisierung des Produktes für die Silan-Vernetzung, durch Anordnung mindestens einer Wasserbehandlungsvorrichtung vor oder im gasgefüllten Durchhangrohr.

FIG.1

FIG.2

FIG. 3

FIG.5

FIG.4

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 542 532 (KABEL- UND METALLWERKE) <br> * Patentansprüche 1-18; Figur 3 * | 1,2,7,8 | H 01 B 13/14 |
| A | FR-A-2 344 939 (MAILLEFER) <br> * Patentansprüche 1-9 * | 1,3,6 | |
| A | FR-A-2 445 000 (PIRELLI) <br> * Patentansprüche 1-5; Figur 1 * | 1 | |
| A | FR-A-2 493 026 (CEAT) <br> * Patentansprüche 1-12 * | 1,2 | |
| E | DE-U-8 913 051 (P. TROESTER) <br> * Insgesamt * | 1-11 | |
| | | | **RECHERCHIERTE SACHGEBIETE (Int. Cl.5)** <br><br> H 01 B 13/00 |

Der vorliegende Recherchenbericht wurde für alle Patentansprüche erstellt

| Recherchenort | Abschlußdatum der Recherche | Prüfer |
|---|---|---|
| DEN HAAG | 19-06-1990 | DROUOT M.C. |

EPO FORM 1503 03.82 (P0403)